# EUROPÄISCHE PATENTSCHRIFT

(11) **EP 3 058 317 B1**
(45) Veröffentlichungstag und Bekanntmachung des Hinweises auf die Patenterteilung: **19.06.2019**
(21) Anmeldenummer: 14808484.1
(22) Anmeldetag: 14.10.2014
(51) Int. Cl.: G01F 1/60, G01F 15/14, G01F 25/00, G01F 1/58

(54) **MAGNETISCH-INDUKTIVES DURCHFLUSSMESSSYSTEM**
MAGNETIC-INDUCTIVE FLOW MEASUREMENT SYSTEM
SYSTÈME MAGNÉTIQUE-INDUCTIF POUR MESURER UN DÉBIT

(30) Priorität: 17.10.2013 DE 102013017286; 15.11.2013 DE 102013019067
(43) Veröffentlichungstag der Anmeldung: 24.08.2016
(73) Patentinhaber: Krohne AG, 4019 Basel (CH)
(72) Erfinder: PERFETTI, Christine, 26300 Chatuzange le Goubet (FR); GONZALEZ-PELAYO, Juan Carlos, 4194 TX Meteren (NL)
(74) Vertreter: Gesthuysen Patent- und Rechtsanwälte
(86) Internationale Anmeldenummer: PCT/EP2014/002769
(87) Internationale Veröffentlichungsnummer: WO 2015/055303

(56) Entgegenhaltungen:
- WO-A2-02/13676
- DE-C1- 3 818 259
- GB-A- 2 406 386
- US-A- 5 417 119
- US-A- 5 450 758
- US-B1- 6 598 487

## Beschreibung

Die Erfindung betrifft ein magnetisch-induktives Durchflussmesssystem, mit einem Messrohr für den Durchfluss eines elektrisch leitenden Mediums und mit einer Magnetfelderzeugungseinrichtung zur Erzeugung eines zumindest auch senkrecht zur Längsachse des Messrohres verlaufenden, vorzugsweise wechselnden Magnetfeldes, mit mindestens zwei die in dem elektrisch leitenden Medium induzierte Messspannung abgreifenden, vorzugsweise das Medium berührenden Messelektroden und vorzugsweise mit einer Auswerteeinheit, wobei die Messelektroden außen am Messrohr zugängliche Messkontakte aufweisen sowie das Messrohr mit den Messelektroden eine erste Funktionseinheit und zu den Messkontakten der Messelektroden korrespondierende Gegenkontakte, die Magnetfelderzeugungseinrichtung und die Auswerteeinheit (soweit eine solche vorhanden ist) eine zweite Funktionseinheit bilden und wobei die Gegenköntakte, die Magnetfelderzeugungseinrichtung und die Auswerteeinheit (soweit eine solche vorhanden ist) in einem Messsystemgehäuse vorgesehen sind.

Magnetisch-induktive Durchflussmesssysteme sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das Prinzip eines magnetisch-induktiven Durchflussmesssystems zur Durchflussmessung eines strömenden Mediums geht auf Michael Faraday zurück, der im Jahre 1832 vorgeschlagen hat, das Prinzip der elektromagnetischen Induktion zur Messung der Strömungsgeschwindigkeit eines elektrisch leitfähigen Mediums anzuwenden:
Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmesssystemen dadurch ausgenutzt, dass mittels einer Magnetfelderzeugungseinrichtung, die meistens mindestens eine Magnetfeldspule aufweist, meistens ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohres bzw. senkrecht zur Strömungsrichtung des Mediums auf.

Wenn es einleitend heißt, dass zu dem magnetisch-induktiven Durchflussmesssystem mindestens eine Magnetfelderzeugungseinrichtung "zur Erzeugung eines zumindest auch senkrecht zur Längsachse des Messrohres verlaufenden Magnetfeldes" gehört, dann sei hier noch einmal darauf hingewiesen, dass das Magnetfeld zwar vorzugsweise senkrecht zur Längsachse des Messrohres bzw. senkrecht zur Strömungsrichtung des Mediums verläuft, ausreichend jedoch ist, dass eine Komponente des Magnetfeldes senkrecht zur Längsachse des Messrohres bzw. senkrecht zur Strömungsrichtung des Mediums verläuft.

Einleitend heißt es auch, dass die Magnetfelderzeugungseinrichtung zur Erzeugung eines vorzugsweise wechselnden Magnetfeldes bestimmt ist. Dadurch wird zum Ausdruck gebracht, dass es für die Lehre der Erfindung - nach ihrem Ausgangspunkt, nach den zugrundeliegenden Aufgaben und nach den Lösungen dieser Aufgaben - nicht darauf ankommt, dass es sich um ein wechselndes Magnetfeld handelt, wenn auch ganz überwiegend magnetisch-induktive Durchflussmesssysteme Magnetfelderzeugungseinrichtungen haben, die ein wechselndes Magnetfeld erzeugen.

Eingangs ist auch ausgeführt, dass zu dem in Rede stehenden magnetisch-induktiven Durchflussmesssystem mindestens zwei die in dem elektrisch leitenden Medium induzierte Messspannung abgreifende, vorzugsweise das Medium berührende Messelektroden gehören. Vorzugsweise verläuft die virtuelle Verbindungslinie der beiden Messelektroden zumindest im Wesentlichen senkrecht zur Richtung des das Messrohr senkrecht zur Längsachse des Messrohres durchsetzenden Magnetfeldes. Insbesondere können die Messelektroden so vorgesehen sein, dass deren virtuelle Verbindungslinie tatsächlich - mehr oder weniger - senkrecht zur Längsachse des Messrohres durchsetzenden Magnetfeldes verläuft.

Schließlich ist eingangs ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmesssysteme, bei denen die Messspannung nicht durch direkt, also nicht durch galvanisch mit dem Medium in Kontakt stehende Messelektroden abgegriffen wird, vielmehr die Messspannung kapazitiv erfasst wird.

Denkbar sind zwei unterschiedliche Ausführungsformen von magnetisch-induktiven Durchflussmesssystemen, nämlich eine erste Ausführungsform, bei der die beiden Funktionseinheiten, also das Messrohr einerseits und die Magnetfelderzeugungseinrichtung andererseits, getrennte Bauteile sind, die erst miteinander in Funktion gebracht ein funktionsfähiges magnetisch-induktives Durchflussmesssystem ergeben, und eine zweite Ausführungsform, bei der die beiden Funktionseinheiten, also das Messrohr und die Magnetfelderzeugungseinrichtung werkseitig bereits miteinander in Funktion gebracht sind, also werkseitig miteinander in Funktion gebrachte Bauteile eines bereits werksseitig funktionsfähigen magnetisch-induktive Durchflussmessgerätes sind.

Nachfolgend wird immer nur die erste Ausführungsform eines magnetisch-induktiven Durchflussmesssystems beschrieben, also die Ausführungsform, bei der das Messrohr einerseits und die Magnetfelderzeugungseinrichtung andererseits zunächst getrennte Bauteile sind, die erst miteinander in Funktion gebracht ein funktionsfähiges magnetisch-induktives Durchflussmesssystem ergeben. Das, was nachfolgend beschrieben wird, ist jedoch auch ohne Weiteres anwendbar auf die zweite Ausführungsform von magnetisch-induktiven Durchflussmesssystemen, bei denen also die beiden Funktionseinheiten, das Messrohr und die Magnetfelderzeugungseinrichtung, werkseitig bereits miteinander in Funktion gebracht sind, also Bauteile eines bereits werkseitig funktionsfähigen magnetisch-induktiven Durchflussmessgeräts.

Zu im Stand der Technik bekannten magnetisch-induktiven Durchflussmessgeräten wird nur beispielhaft verwiesen auf die DE 692 32 633 C2, die DE 199 07 864 A1, die DE 100 64 738 B4, die DE 102 43 748 A1, die DE 10 2008 005 258 A1 und DE 10 2011 112 703 A1 sowie die EP 0 704 682 A1 und die EP 0 834 057 A1.

Die US 5 450 758 A beschriebt ein magnetisch-induktives Durchflussmesssystem gemäß der Präambel des unabhängigen Patentanspruchs 1.

Bei magnetisch-induktiven Durchflussmesssystemen der in Rede stehenden Art gehört zu der Magnetfelderzeugungseinrichtung üblicherweise eine Magnetfeldspule. Diese Magnetfeldspule hat in der Regel einen Spulenkern, und an den Spulenkern schließen sich beidseitig Polschuhe an. Der Spulenkern und die Polschuhe bestehen normalerweise aus magnetisch gut leitendem Material, also aus Material mit einer großen Permeabilität, und die Polschuhe übergreifen beidseitig das Messrohr. Zu dem für das Funktionieren der in Rede stehenden magnetisch-induktiven Durchflussmesssysteme funktionsnotwendigen und funktionswichtigen magnetischen Kreis gehören also der Spulenkern, die beidseitig an den Spulenkern anschließenden Polschuhe und der zwischen den Polschuhen gebildete Luftspalt, in dem sich - im funktionsfähigen Zustand - das Messrohr befindet.

Wie im Einzelnen erläutert, bilden die Längsachse des Messrohres, die Magnetfeldrichtung und die virtuelle Verbindungslinie der beiden Messelektroden ein rechtwinkliges Dreibein. Bezeichnet man die Längsachse des Messrohres als X-Achse, die Magnetfeldrichtung als Y-Achse, dann ist die virtuelle Verbindungslinie der beiden Messelektroden die Z-Achse des rechtwinkligen Dreibeins; die virtuelle Verbindungslinie der beiden Messelektroden verläuft also sowohl senkrecht zur Längsachse des Messrohres als auch senkrecht zur Magnetfeldrichtung.

Aus dem, was zuvor erläutert worden ist, resultiert das Problem, dass sich eine Messelektrode mit ihrem Messkontakt (und der entsprechende Gegenkontakt) auf einer Seite des Messrohres befindet und sich die andere Messelektrode mit ihrem Messkontakt (und der zugeordnete Gegenkontakt) auf der anderen Seite des Messrohres befindet. Das hat sowohl konstruktive als auch anschlusstechnische Nachteile, und diese Nachteile zu eliminieren, ist eine der der Erfindung zugrundeliegenden Aufgaben.

Das erfindungsgemäße magnetisch-induktive Durchflussmesssystem, bei dem die zuvor hergeleitete und aufgezeigte Aufgabe gelöst ist, ist durch die Merkmale des unabhängigen Patentanspruchs 1 gekennzeichnet.

Im Einzelnen gibt es verschiedene Möglichkeiten, die zuvor erläuterte erste erfindungsgemäße Lehre auszugestalten und weiterzubilden.

Eine beispielhafte Ausführungsform eines magnetisch-induktiven Durchflussmesssystems ist dadurch gekennzeichnet, dass der Messkontakt der an der der Magnetfeldspule abgewandten Seite des Messrohres vorgesehenen Messelektrode parallel zur Magnetfeldrichtung verlängert ist und der dem zuvor beschriebenen Messkontakt zugeordnete Gegenkontakt bis zur Kontaktierung mit dem korrespondierenden Messkontakt verlängert ist. Bei dieser Ausführungsform muss also der Gegenkontakt, der mit dem Messkontakt in elektrisch leitendem Kontakt kommen muss, der an der der Magnetfeldspule abgewandten Seite des Messrohres vorgesehen ist, das Messrohr praktisch über dessen gesamten Durchmesser untergreifen oder übergreifen. Es ist jedoch auch ohne Weiteres möglich, den Messkontakt der an der der Magnetfeldspule abgewandten Seite des Messrohres vorgesehenen Messelektrode im unteren Bereich des Messrohres vorzusehen.

Eine andere beispielhafte Ausführungsform eines magnetisch-induktiven Durchflussmesssystems ist dadurch gekennzeichnet, dass der Messkontakt der an der der Magnetfeldspule abgewandten Seite des Messrohres vorgesehenen Messelektrode zumindest einseitig in Umfangsrichtung des Messrohres verlängert ist und der dem zuvor beschriebenen Messkontakt zugeordnete Gegenkontakt bis zur Kontaktierung mit dem korrespondierenden Messkontakt verlängert ist. Bei dieser Ausführungsform ist also der Messkontakt der an der Magnetfeldspule abgewandten Seite vorgesehenen Messelektrode kreisbogenförmig ausgeführt. Dabei kann der kreisbogenförmige Messkontakt etwas weniger als 180° umfassen, nämlich so viel weniger, dass er nicht mit dem Messkontakt der anderen Messelektrode in Berührung kommt.

Das, was zuvor in Bezug auf den Messkontakt der an der der Magnetfeldspule abgewandten Seite des Messrohres vorgesehenen Messelektrode ausgeführt ist, betrifft natürlich nur den außerhalb des Messrohres vorgesehenen Messkontakt der Messelektrode. Innerhalb des Messrohres kann die Messelektrode deren äußerer Messkontakt in besonderer Weise ausgestaltet ist, wie im Übrigen auch die andere Messelektrode so ausgeführt sein, wie das umfangreich zum Stand der Technik gehört.

Bei magnetisch-induktiven Durchflussmesssystemen weist das Messrohr häufig mindestens eine vorzugsweise kreisringförmige Masseelektrode auf. Ist eine solche Masseelektrode vorgesehen, dann kann die Lehre der Erfindung auch dadurch realisiert sein, dass die Masseelektrode eine der beiden Messelektroden darstellt und so ausgeführt ist, wie dies zuvor im Einzelnen erläutert worden ist.

Nach der Lehre der Erfindung ist bei einem magnetisch-induktiven Durchflussmesssystem der in Rede stehenden Art vorgesehen, dass jedem der beiden Gegenkontakte ein Überprüfungskontakt zugeordnet ist und dass die beiden Überprüfungskontakte einerseits und die beiden Messkontakte andererseits so ausgeführt und angeordnet sind, dass die Überprüfungskontakte dann und nur dann elektrisch leitenden Kontakt mit den zugeordneten Messkontakten haben, wenn auch die Gegenkontakte elektrisch leitenden Kontakt mit den zugeordneten Messkontakten haben. Dabei ist vorzugsweise jedem der beiden Überprüfungskontakte ein galvanisch mit den zugeordneten Messkontakten verbundener Überprüfungsgegenkontakt zugeordnet. Das kann in einfacher Weise dadurch realisiert sein, dass jeder der beiden Überprüfungsgegenkontakte und der zugeordnete Messkontakt einstückig ausgeführt sind.

Bei einer bevorzugten Ausführungsform des zuletzt beschriebenen magnetisch-induktiven Durchflussmesssystems sind mindestens eine Überprüfungsspannungsquelle und mindestens ein Kontaktierungsindikator, zum Beispiel eine Leuchtdiode, vorgesehen und bilden die Überprüfungsspannungsquelle, die Überprüfungskontakte, die Überprüfungsgegenkontakte, die zugeordneten Messkontakte, die zugeordneten Gegenkontakte und der Kontaktierungsindikator einen Überprüfungsstromkreis. Dabei ist der Kontaktierungsindikator nur dann aktiv, leuchtet also eine als Kontaktierungsindikator vorgesehene Leuchtdiode nur dann, wenn der Überprüfungsstromkreis geschlossen ist, wenn insbesondere also die Gegenkontakte elektrisch leitenden Kontakt mit den zugeordneten Messkontakten haben.

Es ist ohne Weiteres möglich, nur einen Überprüfungsstromkreis vorzusehen, also einen Überprüfungsstromkreis, der aktiv überprüft, ob jeder der beiden Gegenkontakte elektrisch leitenden Kontakt mit jedem der beiden zugeordneten Messkontakte hat. Dann müssen im Überprüfungsstromkreis die zu überprüfenden Kontaktierungsstellen eine Reihenschaltung bilden. Es ist jedoch zweckmäßig, nicht nur einen Überprüfungsstromkreis, sondern zwei Überprüfungsstromkreise vorzusehen, so dass über die dann vorgesehenen beiden Kontaktierungsindikatoren erkennbar ist, ob beide Gegenkontakte elektrisch leitenden Kontakt mit den zugeordneten Messkontakten haben, ob ein Gegenkontakt keinen elektrisch leitenden Kontakt mit dem zugeordneten Messkontakt hat, und zwar welcher Gegenkontakt keinen elektrisch leitenden Kontakt mit dem zugeordneten Messkontakt hat, oder ob beide Gegenkontakte keinen elektrisch leitenden Kontakt mit den zugeordneten Messkontakten haben.

Nicht selten werden magnetisch-induktive Durchflussmesssysteme der in Rede stehenden Art für Messrohre mit unterschiedlichen Durchflussquerschnitten, also mit unterschiedlichen Innendurchmessern benötigt. Dafür unterschiedliche magnetisch-induktive Durchflussmesssysteme verwenden zu müssen, ist zumindest anwendungstechnisch und kundenseitig unerwünscht. Folglich geht eine weitere Lehre der Erfindung, der in Verbindung mit den zuvor erläuterten Lehren der Erfindung, aber auch losgelöst davon, besondere Bedeutung zukommt, dahin, ein magnetisch-induktives Durchflussmesssystem insgesamt so zu realisieren, dass ohne Weiteres Messrohre mit unterschiedlichen Durchflussquerschnitten, also mit unterschiedlichen Innendurchmessern einsetzbar sind bzw. eingesetzt sein können.

Messrohre mit unterschiedlichen Durchflussquerschnitten, also mit unterschiedlichen Innendurchmessern, können dann ohne Weiteres verwendet werden, wenn die unterschiedlichen Messrohre Messkontakte mit gleichem Außendurchmesser aufweisen, auch wenn sie in Bezug auf die Durchflussquerschnitte, das heißt in Bezug auf die Innendurchmesser, unterschiedlich sind.

Die zuvor beschriebene Realisierung von ohne Weiteres einsetzbaren Messrohren mit unterschiedlichen Durchflussquerschnitten, also mit unterschiedlichen Durchmessern, kann fertigungstechnisch problematisch sein. Folglich ist eine andere Realisierung von ohne Weiteres einsetzbaren Messrohren mit unterschiedlichen Durchflussquerschnitten, also mit unterschiedlichen Innendurchmessern, dadurch gekennzeichnet, dass die unterschiedlichen einsetzbaren bzw. eingesetzten Messrohre jeweils die gleichen oder entsprechende Messkontakte aufweisen. Es reicht also aus, wenn die Messrohre, unabhängig vom Durchflussquerschnitt, also unabhängig vom Innendurchmesser, dort, wo sie mit ihren Messkontakten mit den korrespondierenden Gegenkontakten in elektrisch leitenden Kontakt gebracht werden, gleich, zumindest aber funktionsmäßig gleich sind.

Werden bei einem magnetisch-induktiven Durchflussmesssystem Messrohre mit unterschiedlichen Durchflussquerschnitten, also mit unterschiedlichen Innendurchmessern, eingesetzt, so kann dies der Anwender berücksichtigen. Er kann also in die Auswerteeinheit, die Teil eines erfindungsgemäßen magnetisch-induktiven Durchflussmesssystems sein kann, aber auch getrennt von einem erfindungsgemäßen magnetisch-induktiven Durchflussmesssystem verwirklicht sein kann, den Durchflussquerschnitt, also den Innendurchmesser des einsetzbaren beziehungsweise eingesetzten Messrohres eingeben. Jedoch ist eine besonders bevorzugte Ausführungsform eines magnetisch-induktiven Durchflussmesssystems, bei dem ohne Weiteres Messrohre mit unterschiedlichen Durchflussquerschnitten, also mit unterschiedlichen Innendurchmessern einsetzbar sind, dadurch gekennzeichnet, dass jedes Messrohr mit einem Messrohridentifizierungselement versehen ist und im Messsystemgehäuse ein dem Messrohridentifizierungselement der Messrohre zugeordnetes Messrohrabfrageelement vorgesehen ist. Bei dieser bevorzugten Ausführungsform wird also mit dem Einsetzen des entsprechend ausgerüsteten Messrohres für die Durchflussmessung automatisch der wirksame Durchflussquerschnitt, also der wirksame Innendurchmesser berücksichtigt.

Für erfindungsgemäße magnetisch-induktive Durchflussmesssysteme sind Messrohre mit unterschiedlichen Durchflussquerschnitten, also mit unterschiedlichen Innendurchmessern, die ohne Weiteres einsetzbar sind beziehungsweise eingesetzt werden können, insbesondere solche, die jeweils die gleichen Messkontakte aufweisen, insbesondere dann, wenn sie mit einem Messrohridentifizierungselement versehen sind, Mittel, die sich auf ein wesentliches Element der bisher beschriebenen Erfindung beziehen.

Normalerweise werden magnetisch-induktive Durchflussmesssysteme, nämlich magnetisch-induktive Durchflussmessgeräte, also magnetisch-induktive Durchflussmesssysteme, bei denen die beiden Funktionseinheiten, also das Messrohr und die Magnetfelderzeugungseinrichtung werkseitig bereits miteinander in Funktion gebracht sind, also werkseitig miteinander in Funktion gebrachte Bauteile eines bereits werkseitig funktionsfähigen magnetisch-induktiven Durchflussmessgerätes sind, werkseitig kalibriert. Das ist bei magnetisch-induktiven Durchflussmesssystemen, bei denen die beiden Funktionseinheiten, also das Messrohr einerseits und die Magnetfelderzeugungseinrichtung andererseits, getrennte Bauteile sind, die erst miteinander in Funktion gebracht ein funktionsfähiges magnetisch-induktives Durchflussmesssystem ergeben, praktisch nicht möglich. Folglich ist eine weitere Lehre der Erfindung, der in Verbindung mit den zuvor erläuterten Lehren der Erfindung, aber auch losgelöst davon, besonderer Bedeutung zukommt, dadurch gekennzeichnet, dass eine generelle werkseitig vorgenommene Kalibrierung ausreichend ist, also eine anwendungsspezifische Kalibrierung beim Einsatz von Messrohren mit unterschiedlichen Durchflussquerschnitten, also mit unterschiedlichen Innendurchmessern nicht erforderlich ist. Um das zu erreichen, sind verschiedene Maßnahmen notwendig beziehungsweise zweckmäßig.

Eine bevorzugte Ausführungsform des zuletzt beschriebenen magnetisch-induktiven Durchflussmesssystems ist dadurch gekennzeichnet, dass die Magnetfelderzeugungseinrichtung ein für alle einsetzbaren Messrohre ausreichend homogenes Magnetfeld erzeugt. Das kann im Einzelnen bei einem magnetisch-induktiven Durchflussmesssystem, bei dem zu der Magnetfelderzeugungseinrichtung mindestens eine Magnetspule mit einem Spulenkern und zwei an den Spulenkern sich beidseitig anschließende Polschuhe gehören, dadurch realisiert sein, dass sich die Polschuhe beidseitig über das eingesetzte Messrohr erstrecken. Konkret sollte man so vorgehen, dass sich die Polschuhe beidseitig um ein Maß über das eingesetzte Messrohr erstrecken, das dem Außendurchmesser des Messrohres mit dem größten Außendurchmesser im Bereich der Polschuhe entspricht.

Dafür, dass eine generell werkseitig vorgenommene Kalibrierung ausreichend ist, also eine anwendungsspezifische Kalibrierung beim Einsatz von Messrohren mit unterschiedlichen Durchflussquerschnitten, also mit unterschiedlichen Innendurchmessern nicht erforderlich ist, ist auch wichtig, dass bestimmte Toleranzen eingehalten werden. Einerseits sollten nur Messrohre eingesetzt werden beziehungsweise eingesetzt sein, deren prozentuale Durchmessertoleranz kleiner ist als die Hälfte der gewollten prozentualen Genauigkeit. Andererseits sollten die Messrohre in dem Messsystemgehäuse mit einer prozentualen Lagetoleranz fixierbar beziehungsweise fixiert sein, die einem Viertel der gewollten prozentualen Genauigkeit entspricht. Um die gewollte Lagetoleranz sicherzustellen, empfehlt es sich, die Messrohre einerseits und das Messsystemgehäuse andererseits mit zueinander korrespondierenden, die gewollte Lagetoleranz sicherstellenden horizontalen und/oder vertikalen Fixierelementen zu versehen.

Wie dargelegt, gibt es verschiedene Möglichkeiten, das erfindungsgemäße magnetisch-induktive Durchflussmesssystem auszugestalten und weiterzubilden. Dazu wird verwiesen auf die nebengeordneten Patentansprüche 1, 5, 9 und 13 sowie auf die diesen Patentansprüchen nachgeordneten Patentansprüche sowie auf die nachfolgende Beschreibung von Ausführungsbeispielen in Verbindung mit der Zeichnung. In der Zeichnung zeigen
- Fig. 1: relativ schematisch, den grundsätzlichen Aufbau eines magnetisch-induktiven Durchflussmesssystems,
- Fig. 2: eine sehr schematische Darstellung zur Erläuterung einer Realisierungsmöglichkeit eines magnetisch-induktiven Durchflussmesssystems,
- Fig. 3: eine sehr schematische Darstellung zur Erläuterung einer für die Erfindung wesentlichen Lehre,
- Fig. 4: schematisch, ein mögliches Ausführungsbeispiel eines erfindungsgemäßen magnetisch-induktiven Durchflussmesssystems,
- Fig. 5: ein anderes Ausführungsbeispiel eines erfindungsgemäßen magnetisch-induktiven Durchflussmesssystems.

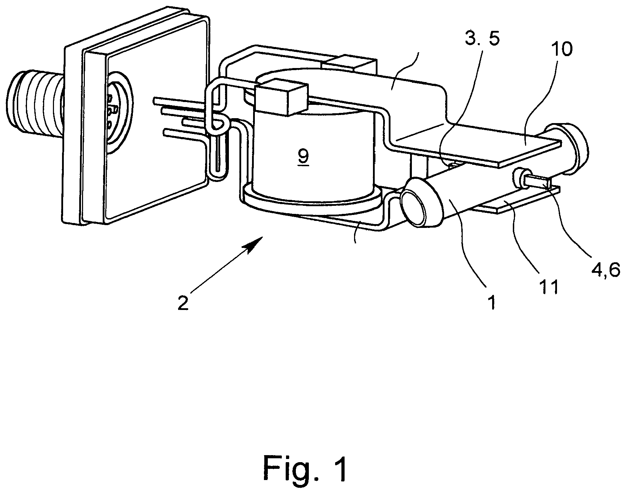

Zu den in den Fig. 1, 4 und 5 nur schematisch dargestellten magnetisch-induktiven Durchflussmesssystemen gehören, zunächst und im Wesentlichen, ein Messrohr 1 für den Durchfluss eines elektrisch leitenden Mediums und eine Magnetfelderzeugungseinrichtung 2 zur Erzeugung eines zumindest auch senkrecht zur Längsachse des Messrohres 1 verlaufenden, vorzugsweise wechselnden Magnetfeldes und zwei die in dem elektrisch leitenden Medium induzierte Messspannung abgreifende, vorzugsweise das Medium berührende Messelektroden 3, 4, wobei die Messelektroden 3, 4 außen am Messrohr 1 zugängliche Messkontakte 5, 6 aufweisen.

Grundsätzlich gehört zu magnetisch-induktiven Durch-flussmesssystemen auch eine Auswerteeinheit und ein Messsystemgehäuse. Die nicht dargestellte Auswerteeinheit kann Teil eines erfindungsgemäßen magnetisch-induktiven Durchflussmesssystems sein, die Auswerteeinheit kann aber auch als separates Bauteil verwirklicht sein.

Das Messrohr 1 mit den Messelektroden 3, 4 bilden eine erste Funktionseinheit, und zu den Messkontakten 5, 6 der Messelektroden 3, 4 korrespondierende Gegenkontakte 7, 8, die Magnetfelderzeugungseinrichtung 2 und die Auswerteeinheit (soweit eine solche vorhanden ist) bilden eine zweite Funktionseinheit. Die Gegenkontakte 7, 8, die Magnetfelderzeugungseinrichtung 2 und die Auswerteeinheit (soweit eine solche vorhanden ist) sind in dem nicht dargestellten Messsystemgehäuse vorgesehen.

Bei dem in der Fig. 1 schematisch dargestellten magnetisch-induktiven Durchflussmesssystem gehört zu der Magnetfelderzeugungseinrichtung 2 eine Magnetfeldspule 9, die einen im Einzelnen nicht dargestellten Spulenkern hat. An den nicht dargestellten Spulenkern schließen sich beidseitig Polschuhe 10, 11 an. Der nicht dargestellte Spulenkern und die Polschuhe 10, 11 bestehen normalerweise aus magnetisch gut leitendem Material, und, wie in der Fig. 1 angedeutet, übergreifen die Polschuhe 10, 11 beidseitig das Messrohr 1.

Wie weiter oben erläutert, sind zwei unterschiedliche Ausführungsformen von magnetisch-induktiven Durchflussmesssystemen möglich, nämlich eine erste Ausführungsform, bei der die beiden zuvor erläuterten Funktionseinheiten getrennte Bauteile sind, die erst miteinander in Funktion gebracht ein funktionsfähiges magnetisch-induktives Durchflussmesssystem ergeben, und eine zweite Ausführungsform, bei der die beiden zuvor erläuterten Funktionseinheiten bereits werkseitig miteinander in Funktion gebracht sind, also werkseitig miteinander in Funktion gebrachte Bauteile eines bereits werkseitig funktionsfähigen magnetisch-induktiven Durchflussmessgerätes sind. Nachfolgend wird immer nur die erste Ausführungsform beschrieben. Das, was nachfolgend beschrieben wird, ist jedoch auch anwendbar auf die zweite Ausführungsform.

Für das erfindungsgemäße magnetisch-induktive Durchflussmesssystem gilt nun zunächst, dass die Messkontakte 5, 6 der Messelektroden 3, 4 so am Messrohr 1 vorgesehen und die zu den Messkontakten 5, 6 der Messelektroden 3, 4 korrespondierenden Gegenkontakte 7, 8 so im nicht dargestellten Messsystemgehäuse angeordnet sind, dass die Messkontakte 5, 6 durch eine im Wesentlichen senkrecht zur Magnetfeldrichtung verlaufende, im Wesentlichen nur translatorische Bewegung mit den Gegenkontakten 7, 8 in elektrisch leitendem Kontakt bringbar sind. Das kann im Einzelnen in unterschiedlicher Weise realisiert sein.

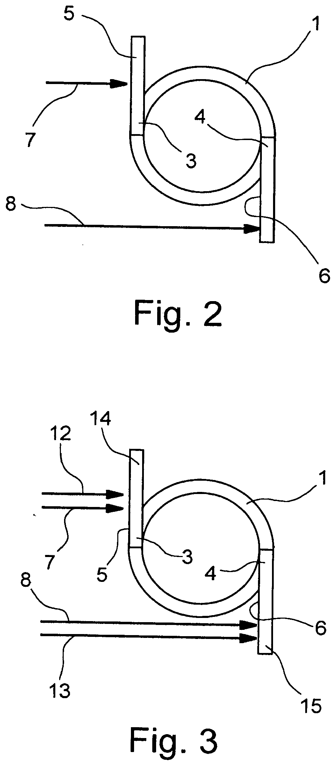

Eine erste Realisierungsmöglichkeit ist in den Fig. 2 und 3 angedeutet. Dabei ist der Messkontakt 6 der an der der Magnetfeldspule 9 abgewandten Seite des Messrohres 1 vorgesehenen Messelektrode 4 zumindest einseitig parallel zur Magnetfeldrichtung verlängert und ist der dem zuvor beschriebenen Messkontakt 6 zugeordnete Gegenkontakt 8 bis zur Kontaktierung mit dem korrespondierenden Messkontakt 6 verlängert. Es ist jedoch auch ohne Weiteres möglich,den Messkontakt 6 der an der der Magnetfeldspule 9 abgewandten Seite des Messrohres 1 vorgesehenen Messelektrode 4 im unteren Bereich des Messrohres 1 vorzusehen.

Eine andere, nicht dargestellte Realisierungsmöglichkeit ist dadurch gekennzeichnet, dass der Messkontakt der an der der Magnetfeldspule abgewandten Seite des Messrohres vorgesehenen Messelektrode zumindest einseitig in Umfangsrichtung des Messrohres verlängert ist und der dem zuvor beschriebenen Messkontakt zugeordnete Gegenkontakt bis zur Kontaktierung mit dem korrespondierenden Messkontakt verlängert ist.

Bei magnetisch-induktiven Durchflussmessgeräten weist das Messrohr häufig mindestens eine vorzugsweise kreisringförmige Masseelektrode auf. Bei einer solchen Ausführungsform kann die Masseelektrode eine der beiden Messelektroden darstellen.

Die Fig. 3 dient der Erläuterung der Lehre der Erfindung. Dabei ist nämlich vorgesehen, dass jedem der beiden Gegenkontakte 7, 8 ein Überprüfungskontakt 12, 13 zugeordnet ist und dass die beiden Überprüfungskontakte 12, 13 einerseits und die beiden Messkontakte 5, 6 andererseits so ausgeführt und angeordnet sind, dass die Überprüfungskontakte 12, 13 dann und nur dann elektrisch leitenden Kontakt mit den zugeordneten Gegenkontakten 7, 8 haben, wenn auch die Gegenkontakte 7, 8 elektrisch leitenden Kontakt mit den zugeordneten Messkontakten 5, 6 haben. Dabei ist den Überprüfungskontakten 12, 13 ein galvanisch mit den zugeordneten Messkontakten 5, 6 verbundener Überprüfungsgegenkontakt 14, 15 zugeordnet. Das ist in einfacher Weise dadurch realisiert, dass jeder der beiden Überprüfungsgegenkontakte 14, 15 und der jeweils zugeordnete Messkontakt 5, 6 einstückig ausgeführt sind.

Bei einer bevorzugten Ausführungsform des zuletzt beschriebenen magnetisch-induktiven Durchflussmessgeräts, die jedoch nicht dargestellt ist, sind mindestens eine Überprüfungsspannungsquelle und mindestens ein Kontaktierungsindikator, zum Beispiel eine Leuchtdiode, vorgesehen und bilden die Überprüfungsspannungsquelle, die Überprüfungskontakte, die Überprüfungsgegenkontakte, die zugeordneten Messkontakte, die zugeordneten Gegenkontakte und der Kontaktierungsindikator einen Überprüfungsstromkreis. Der Kontaktierungsindikator ist also nur dann aktiv, eine als Kontaktierungsindikator vorgesehene Leuchtdiode leuchtet also nur dann, wenn der zuvor beschriebene Überprüfungsstromkreis geschlossen ist, wenn also insbesondere die Gegenkontakte elektrisch leitenden Kontakt mit den zugeordneten Messkontakten haben, - was zu überprüfen beziehungsweise zu verifizieren Sinn und Zweck des Überprüfungsstromkreises ist.

Zwar ist es ohne Weiteres möglich, nur einen Überprüfungsstromkreis vorzusehen, also einen Überprüfungsstromkreis, der überprüft, ob jeder der beiden Gegenkontakte 7, 8 elektrisch leitenden Kontakt mit jedem der beiden zugeordneten Messkontakte 5, 6 hat. Zweckmäßig ist es jedoch, nicht nur einen Überprüfungsstromkreis vorzusehen, sondern zwei Überprüfungsstromkreise, so dass über die dann vorgesehenen beiden Kontaktierungsindikatoren erkennbar ist, ob beide Gegenkontakte elektrisch leitenden Kontakt mit den zugeordneten Messkontakten haben, ob ein Gegenkontakt keinen elektrisch leitenden Kontakt mit dem zugeordneten Messkontakt hat, und zwar welcher Gegenkontakt keinen elektrisch leitenden Kontakt mit dem entsprechenden Messkontakt hat, oder ob beide Gegenkontakte keinen elektrisch leitenden Kontakt mit den Messkontakten haben.

Wie weiter oben ausgeführt, werden magnetisch-induktive Durchflussmesssysteme häufig für Messrohre mit unterschiedlichen Durchflussquerschnitten, also mit unterschiedlichen Innendurchmessern benötigt. In Verbindung damit geht eine weitere Lehre der Erfindung, der wiederum in Verbindung mit den zuvor erläuterten Lehren der Erfindung, aber auch losgelöst davon, besonderer Bedeutung zukommt, dahin, ein magnetisch-induktives Durchflussmesssystem so zu realisieren, das ohne Weiteres Messrohre 1 mit unterschiedlichen Durchflussquerschnitten, also mit unterschiedlichen Innendurchmessern einsetzbar sind beziehungsweise eingesetzt sein können.

Messrohre 1 mit unterschiedlichen Durchflussquerschnitten, also mit unterschiedlichen Innendurchmessern, können dann ohne Weiteres verwendet werden, wenn die unterschiedlichen Messrohre 1 jeweils die Messkontakte 5, 6 mit gleichem Außendurchmesser aufweisen, wenn sich also die Messrohre 1 nur in Bezug auf die Durchflussquerschnitte, also in Bezug auf die Innendurchmesser, unterscheiden.

Eine andere Realisierung von ohne Weiteres einsetzbaren Messrohren 1 mit unterschiedlichen Durchflussquerschnitten, also mit unterschiedlichen Innendurchmessern, ist dadurch gekennzeichnet, dass die unterschiedlichen einsetzbaren bzw. eingesetzten Messrohre 1 jeweils die gleichen oder entsprechende Messkontakte 5, 6 aufweisen. Es reicht nämlich aus, wenn die Messrohre 1, unabhängig vom Durchflussquerschnitt, also unabhängig vom Innendurchmesser, dort, wo sie mit ihren Messkontakten 5, 6 mit den korrespondierenden Gegenkontakten 7, 8 in elektrisch leitenden Kontakt gebracht werden, gleich, zumindest aber funktionsmäßig gleich sind.

Bei magnetisch-induktiven Durchflussmesssystemen kann der Anwender die Verwendung von Messrohren mit unterschiedlichen Durchflussquerschnitten, also mit unterschiedlichen Innendurchmessern selbst berücksichtigen, nämlich dadurch, dass er in die Auswerteeinheit, die Teil eines erfindungsgemäßen magnetisch-induktiven Messsystems sein kann, aber auch getrennt von einem solchen Durchflussmesssystem verwirklicht sein kann, den Durchflussquerschnitt, also den Innendurchmesser des jeweils eingesetzten Messrohres eingibt. Das ist jedoch aufwendig, kann insbesondere zu fehlerhaften Eingaben führen. Folglich ist eine besonders bevorzugte Ausführungsform des zuletzt beschriebenen magnetisch-induktiven Durchflussmesssystems dadurch gekennzeichnet, dass jedes Messrohr mit einem Messrohridentifizierungselement versehen ist und im Messsystemgehäuse ein dem Messrohridentifizierungselement der Messrohre zugeordnetes Messrohrabfrageelement vorgesehen ist, eine Ausführungsform, die jedoch nicht dargestellt ist, jedoch für sich ohne Weiteres verständlich ist.

Üblich ist es, dass magnetisch-induktive Durchflussmesssysteme, nämlich magnetisch-induktive Durchflussmessgeräte, bei denen also die beiden Funktionseinheiten bereits werkseitig miteinander in Funktion gebracht sind, werkseitig kalibriert werden. Bei magnetisch-induktiven Durchflussmesssystemen, bei denen die beiden Funktionseinheiten, also das Messrohr einerseits und die Magnetfelderzeugungseinrichtung andererseits getrennte Bauteile sind, die erst miteinander in Funktion gebracht ein funktionsfähiges magnetisch-induktives Durchflussmesssystem ergeben, ist das in der Praxis nicht möglich, insbesondere dann nicht möglich, wenn es sich bei den Messrohren um solche handelt, die vor ihrer Verwendung sterilisiert sind und steril bleiben müssen. Das berücksichtigend ist eine besonders bevorzugte Ausführungsform eines magnetisch-induktiven Durchflussmesssystems dadurch gekennzeichnet, dass eine generelle werkseitig vorgenommene Kalibrierung ausreichend ist, also eine anwendungsspezifische Kalibrierung beim Einsatz von Messrohren mit unterschiedlichen Durchflussquerschnitten, also mit unterschiedlichen Innendurchmessern nicht erforderlich ist. Das ist dann und nur dann erreichbar beziehungsweise erreicht, wenn besondere Maßnahmen verwirklicht sind.

Zunächst muss dafür gesorgt sein, dass die Magnetfelderzeugungseinrichtung 2 ein für alle einsetzbaren Messrohre 1 ausreichend homogenes Magnetfeld erzeugt. Insbesondere muss also dafür gesorgt werden, dass das durch die Magnetfelderzeugungseinrichtung 2 erzeugte Magnetfeld jedenfalls über den gesamten Innendurchmesser der verwendeten Messrohre 1 homogen ist.

Für ein magnetisch-induktives Durchflussmesssystem, bei dem zu der Magnetfelderzeugungseinrichtung 2 mindestens eine Magnetfeldspule 9 mit einem Spulenkern und zwei an den Spulenkern sich beidseitig anschließende Polschuhe 10, 11 gehören, sollten sich deshalb die Polschuhe 10, 11 beidseitig über das eingesetzte Messrohr 1 erstrecken. Im Einzelnen sollten sich die Polschuhe 10, 11 beidseitig um ein solches Maß über das eingesetzte Messrohr 1 erstrecken, dass dem Außendurchmesser des Messrohres 1 mit dem größten Außendurchmesser im Bereich der Polschuhe 10, 11 entspricht.

Soll ein magnetisch-induktives Durchflussmesssystem realisiert werden, bei dem eine generelle werkseitig vorgenommene Kalibrierung ausreichend ist, also eine anwendungsspezifische Kalibrierung beim Einsatz von Messrohren 1 mit unterschiedlichen Durchflussquerschnitten, also mit unterschiedlichen Innendurchmessern nicht erforderlich ist, dann ist es auch von Bedeutung, dass bestimmte Toleranzen eingehalten werden. So sollten nur Messrohre 1 eingesetzt werden, deren prozentuale Durchmessertoleranz kleiner ist als die Hälfte der gewollten prozentualen Genauigkeit, und sollten die Messrohre 1 in dem Messsystemgehäuse mit einer prozentualen Lagetoleranz fixierbar beziehungsweise fixiert sein, die einem Viertel der gewollten prozentualen Genauigkeit entspricht. In Verbindung mit der vorgegebenen prozentualen Lagetoleranz kann von Bedeutung sein, dass, was nicht dargestellt ist, die Messrohre einerseits und das Messsystemgehäuse andererseits zueinander korrespondierende, die gewollte Lagetoleranz sicherstellende horizontale und/oder vertikale Fixierelemente aufweisen.

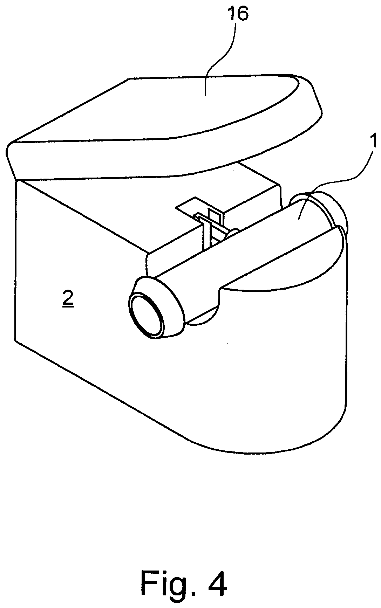

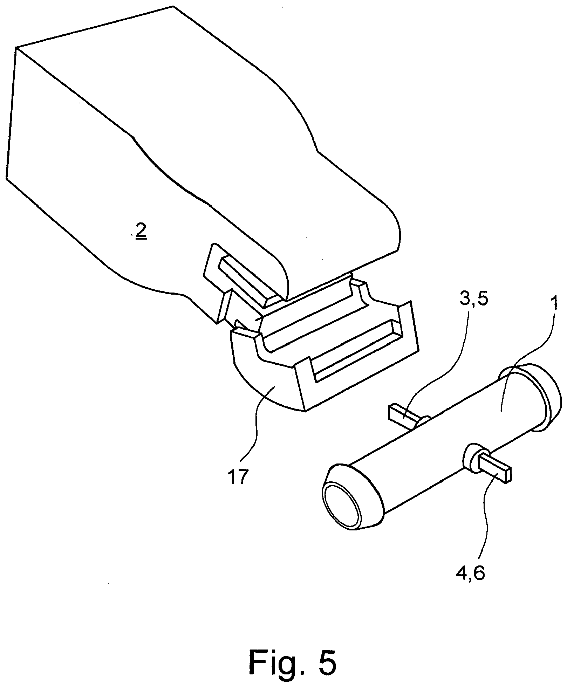

Für die in den Fig. 4 und 5 nur sehr schematisch dargestellten Ausführungsbeispiele erfindungsgemäßer magnetisch-induktiver Durchflussmesssysteme gilt, dass mit Hilfe eines nach oben schwenkbaren Deckels 16 (Fig. 4) beziehungsweise mit Hilfe einer nach vorne schwenkbaren Klappe 17 das magnetisch-induktive Durchflussmesssystem so geöffnet werden kann, dass die jeweils zu verwendenden Messrohre 1 mit ihren Messelektroden 3, 4 und den zugehörigen Messkontakten 5, 6 ohne Weiteres eingesetzt werden können.

Ausführungsformen magnetisch-induktiver Durchflussmesssysteme, die keine beweglichen Teile wie ein Deckel 16 bei der Ausführungsform nach Fig. 4 beziehungsweise wie eine Klappe 17 bei der Ausführungsform nach Fig. 5 aufweisen, sind den in den Fig. 4 und 5 dargestellten Ausführungsformen vorzuziehen.

## Patentansprüche

1. Magnetisch-induktives Durchflussmesssystem, mit einem Messrohr (1) für den Durchfluss eines elektrisch leitenden Mediums und mit einer Magnetfelderzeugungseinrichtung (2) zur Erzeugung eines zumindest auch senkrecht zur Längsachse des Messrohres (1) verlaufenden, vorzugsweise wechselnden Magnetfeldes, mit mindestens zwei die in dem elektrisch leitenden Medium induzierte Messspannung abgreifenden, vorzugsweise das Medium berührenden Messelektroden (3, 4) und vorzugsweise mit einer Auswerteeinheit, wobei die Messelektroden (3, 4) außen am Messrohr (1) zugängliche Messkontakte (5, 6) aufweisen sowie das Messrohr (1) mit den Messelektroden (3, 4) eine erste Funktionseinheit und zu den Messkontakten (5, 6) der Messelektroden (3, 4) korrespondierende Gegenkontakte (7, 8), die Magnetfelderzeugungseinrichtung (2) und die Auswerteeinheit (soweit eine solche vorhanden ist) eine zweite Funktionseinheit bilden und wobei die Gegenkontakte (7, 8), die Magnetfelderzeugungseinrichtung (2) und die Auswerteeinheit (soweit eine solche vorhanden ist) in einem Messsystemgehäuse vorgesehen sind,
**dadurch gekennzeichnet,**
**dass** jedem der beiden Gegenkontakte (7, 8) ein Überprüfungskontakt (12, 13) zugeordnet ist und dass die beiden Überprüfungskontakte (12, 13) einerseits und die beiden Messkontakte (5, 6) andererseits so ausgeführt und angeordnet sind, dass die Überprüfungskontakte (12, 13) dann und nur dann elektrisch leitenden Kontakt mit den zugeordneten Gegenkontakten (7, 8) haben, wenn auch die Gegenkontakte (7, 8) elektrisch leitenden Kontakt mit den zugeordneten Messkontakten (5, 6) haben.

2. Magnetisch-induktives Durchflussmesssystem nach Anspruch 1, **dadurch gekennzeichnet, dass** jedem der beiden Überprüfungskontakte (12, 13) ein galvanisch mit dem zugeordneten Messkontakt (5, 6) verbundener Überprüfungsgegenkontakt (14, 15) zugeordnet ist.

3. Magnetisch-induktives Durchflussmesssystem nach Anspruch 2, **dadurch gekennzeichnet, dass** jeder der beiden Überprüfungsgegenkontakte (14, 15) und der zugeordnete Messkontakt (5, 6) einstückig ausgeführt sind.

4. Magnetisch-induktives Durchflussmesssystem nach einem der Ansprüche 1 bis 3, **dadurch gekennzeichnet, dass** mindestens eine Überprüfungsspannungsquelle und mindestens ein Kontaktierungsindikator vorgesehen sind und dass die Überprüfungsspannungsquelle, die Überprüfungskontakte (12, 13), die Überprüfungsgegenkontakte (14, 15), die zugeordneten Messkontakte (5, 6), die zugeordneten Gegenkontakte (7, 8) und der Kontaktierungsindikator einen Überprüfungsstromkreis bilden.

5. Magnetisch-induktives Durchflussmesssystem nach einem der Ansprüche 1 bis 4, wobei Messrohre (1) mit unterschiedlichen Durchflussquerschnitten, also mit unterschiedlichen Innendurchmessern einsetzbar sind bzw. eingesetzt sein können, **dadurch gekennzeichnet,**
**dass** jedes Messrohr (1) mit einem Messrohridentifizierungselement versehen ist und im Messsystemgehäuse ein dem Messrohridentifizierungselement der Messrohre (1) zugeordnetes Messrohrabfrageelement vorgesehen ist.

6. Magnetisch-induktives Durchflussmesssystem nach Anspruch 5, **dadurch gekennzeichnet, dass** die unterschiedlich einsetzbaren bzw. eingesetzten Messrohre (1) Messkontakte (5, 6) mit gleichem Außendurchmesser aufweisen.

7. Magnetisch-induktives Durchflussmesssystem nach Anspruch 5, **dadurch gekennzeichnet, dass** die unterschiedlich einsetzbaren bzw. eingesetzten Messrohre (1) jeweils die gleichen oder entsprechende Messkontakte (5, 6) aufweisen.

8. Magnetisch-induktives Durchflussmesssystem nach einem der Ansprüche 1 bis 7, **dadurch gekennzeichnet, dass** eine generelle werkseitig vorgenommene Kalibrierung der zweiten Funktionseinheit ausreichend ist, also eine anwendungsspezifische Kalibrierung beim Einsatz von Messrohren (1) mit unterschiedlichen Durchflussquerschnitten, also mit unterschiedlichen Innendurchmessern nicht erforderlich ist, dadurch, dass nur Messrohre (1) eingesetzt werden beziehungsweise eingesetzt sind, deren prozentuale Durchmessertoleranz kleiner ist als die Hälfte der gewollten prozentualen Genauigkeit und dadurch, dass die Messrohre (1) in dem Messsystemgehäuse mit einer prozentualen Lagetoleranz fixierbar beziehungsweise fixiert sind, die einem Viertel der gewollten prozentualen Genauigkeit entspricht.

9. Magnetisch-induktives Durchflussmesssystem nach Anspruch 8, wobei zu der Magnetfelderzeugungseinrichtung (2) mindestens eine Magnetfeldspule (9) mit einem Spulenkern und zwei an den Spulenkern sich beidseitig anschließende Polschuhe (10, 11) gehören, **dadurch gekennzeichnet, dass** die Magnetfelderzeugungseinrichtung (2) ein für alle einsetzbaren Messrohre (1) ausreichend homogenes Magnetfeld erzeugt, dadurch dass sich die Polschuhe (10, 11), beidseitig über das eingesetzte Messrohr (1) erstrecken.

10. Magnetisch-induktives Durchflussmesssystem nach Anspruch 9, **dadurch gekennzeichnet, dass** sich die Polschuhe (10, 11) beidseitig um ein Maß über das eingesetzte Messrohr (1) erstrecken, das dem Außendurchmesser des Messrohres (1) mit dem größten Außendurchmesser im Bereich der Polschuhe (10, 11) entspricht.

11. Magnetisch-induktives Durchflussmesssystem nach Anspruch 8, **dadurch gekennzeichnet, dass** die Messrohre (1) einerseits und das Messsystemgehäuse andererseits zueinander korrespondierende, die gewollte Lagetoleranz sicherstellende horizontale und/oder vertikale Fixierelemente aufweisen.

## Claims

1. Magnetic-inductive flow measuring system, having a measuring tube (1) for the flow of an electrically conductive medium and having a magnetic field generator (2) for generating a, preferably alternating, magnetic field running at least also perpendicular to the longitudinal axis of the measuring tube (1), having at least two measuring electrodes (3, 4) tapping the measuring voltage induced in the electrically conductive medium, preferably in contact with the medium and preferably having an evaluation unit, wherein the measuring electrodes (3, 4) have measuring contacts (5, 6) accessible on the outside of the measuring tube (1) and the measuring tube (1) with the measuring electrodes (3, 4) forming a first functional unit and counter contacts (7, 8) corresponding to the measuring contacts (5, 6) of the measuring electrodes (3, 4), the magnetic field generator (2) and the evaluation unit (insofar such is present) forming a second functional unit and wherein the counter contacts (7, 8), the magnetic field generator (2) and the evaluation unit (insofar such is present) are provided in a measuring system housing,
**characterized in**
**that** each of the two counter contacts (7, 8) is assigned a test contact (12, 13) and that the two test contacts (12, 13), on the one hand, and the two measuring contacts (5, 6), on the other hand, are designed and arranged in such a manner that the test contacts (12, 13) have electro-conductive contact to the assigned counter contacts (7, 8) when and only when the counter contact (7, 8) also has electro-conductive contact to the assigned measuring contacts (5, 6).

2. Magnetic-inductive flow measuring system according to claim 1, **characterized in that** each of the two test contacts (12, 13) is assigned to a test counter contact (14, 15) galvanically connected to the assigned measuring contact (5, 6).

3. Magnetic-inductive flow measuring system according to claim 2, **characterized in that** each of the two test counter-contacts (14, 15) and the assigned measuring contact (5, 6) are designed in one piece.

4. Magnetic-inductive flow measuring system according to any one of claims 1 to 3, **characterized in that** at least one test voltage source and at least one contact indicator are provided and that the test voltage source, the test contacts (12, 13), the test counter contacts (14, 15), the assigned measuring contacts (5, 6), the assigned counter contacts (7, 8) and the contact indicator form a test circuit.

5. Magnetic-inductive flow measuring system according to one of claims 1 to 4, wherein measuring tubes (1) with different flow cross-sections, i.e. with different internal diameters, can be or are used, **characterized in**
**that** each measuring tube (1) is provided with a measuring tube revealing member and a measuring tube query member assigned to the measuring tube revealing member of the measuring tube (1) in the measuring system housing.

6. Magnetic-inductive flow measuring system according to claim 5, **characterized in that** the measuring tubes (1), which can be or are differently used, have measuring contacts (5, 6) with the same outer diameter.

7. Magnetic-inductive flow measuring system according to claim 5, **characterized in that** the measuring tubes (1) which can be or are differently used each have the same or corresponding measuring contacts (5, 6).

8. Magnetic-inductive flow measuring system according to any one of claims 1 to 7, **characterized in that** a general in-factory calibration of the second functional unit is sufficient, i.e. an application-specific calibration is not necessary when using measuring tubes (1) with different flow cross-sections, i.e. with different internal diameters, that only measuring tubes (1) whose percentage diameter tolerance is smaller than half of the desired percentage accuracy can be or are used, and that the measuring tubes (1) can be or are fixed in the measuring system housing with a percentage position tolerance which corresponds to a quarter of the desired percentage accuracy.

9. Magnetic-inductive flow measuring system according to claim 8, wherein the magnetic field generating device (2) comprises at least one magnetic field coil (9) with a coil core and two pole shoes (10, 11) adjoining the coil core on both sides, **characterized in that** the magnetic field generator (2) generates a sufficiently homogeneous magnetic field for all applicable measuring tubes (1), **in that** the pole shoes (10, 11) extend on both sides over the inserted measuring tube (1).

10. Magnetic-inductive flow measuring system according to claim 9, **characterized in that** the pole shoes (10, 11) extend on both sides over the inserted measuring tube (1) by a measure which corresponds to the outer diameter of the measuring tube (1) with the largest outer diameter in the region of the pole shoes (10, 11).

11. Magnetic-inductive flow measuring system according to claim 8, **characterized in that** the measuring tubes (1) on the one hand and the measuring system housing on the other hand have corresponding horizontal and/or vertical attachment elements which ensure the desired position tolerance.

## Revendications

1. Système de mesure de débit magnéto-inductif, comprenant un tube de mesure (1) servant à mesurer le débit d'un milieu électriquement conducteur et un système générateur de champ magnétique (2) servant à générer un champ magnétique, de préférence alternatif, qui s'étend au moins également perpendiculairement à l'axe longitudinal du tube de mesure (1), au moins deux électrodes de mesure (3, 4), de préférence en contact avec le milieu électriquement conducteur et, de préférence, un module d'évaluation, dans lequel les électrodes de mesure (3, 4) comportent des contacts de mesure (5, 6) accessibles à l'extérieur sur le tube de mesure (1) et le tube de mesure (1) forme une première unité fonctionnelle avec les électrodes de mesure (3, 4) et des contacts homologues (7, 8) correspondant aux contacts de mesure (5, 6) des électrodes de mesure (3, 4), le système générateur de champ magnétique (2) et le module d'évaluation (s'il est présent) forment une deuxième unité fonctionnelle et dans lequel les contacts homologues (7, 8), le système générateur de champ magnétique (2) et le module d'évaluation (s'il est présent) sont prévus dans un boîtier de système de mesure,
**caractérisé en ce qu'**un contact de contrôle (12, 13) est associé à chacun des deux contacts homologues (7, 8) et **en ce que** les deux contacts de contrôle (12, 13), d'une part, et les deux contacts de mesure (5, 6), d'autre part, sont conçus et disposés de manière à ce que les contacts de contrôle (12, 13) ne soient en contact électriquement conducteur avec les contacts homologues (7, 8) associés que si et seulement si les contacts homologues (7, 8) sont également en contact électriquement conducteur avec les contacts de mesure (5, 6) associés.

2. Système de mesure de débit magnéto-inductif selon la revendication 1, **caractérisé en ce qu'**un contact de contrôle homologue (14, 15) relié électriquement au contact de mesure (5, 6) associé est associé à chacun des deux contacts de contrôle (12, 13) .

3. Système de mesure de débit magnéto-inductif selon la revendication 2, **caractérisé en ce que** chacun des deux contacts de contrôle homologues (14, 15) et le contact de mesure (5, 6) associé sont réalisés en une seule pièce.

4. Système de mesure de débit magnéto-inductif selon l'une des revendications 1 à 3, **caractérisé en ce qu'**il est prévu au moins une source de tension de contrôle et au moins un indicateur de contact et **en ce que** la source de tension de contrôle, les contacts de contrôle (12, 13), les contacts de contrôle homologues (14, 15), les contacts de mesure associés (5, 6), les contacts de contrôle associés (7, 8) et l'indicateur de contact constituent un circuit de contrôle.

5. Système de mesure de débit magnéto-inductif selon l'une des revendications 1 à 4, dans lequel des tubes de mesure (1) ayant des sections transversales d'écoulement différentes, c'est-à-dire des diamètres intérieurs différents, peuvent être utilisés ou sont utilisés, **caractérisé en ce que** chaque tube de mesure (1) est pourvu d'un élément d'identification du tube de mesure et **en ce qu'**il est prévu dans le boîtier de système de mesure un élément de recherche de tube de mesure, qui est associé à l'élément d'identification de tube de mesure des tubes de mesure (1).

6. Système de mesure de débit magnéto-inductif selon la revendication 5, **caractérisé en ce que** les tubes de mesure (1), qui peuvent être utilisés ou qui sont utilisés différemment, comportent des contacts de mesure (5, 6) qui présentent le même diamètre extérieur.

7. Système de mesure de débit magnéto-inductif selon la revendication 5, **caractérisé en ce que** les tubes de mesure (1), qui peuvent être utilisés ou sont utilisés différemment, présentent chacun des contacts de mesure (5, 6) identiques ou correspondants.

8. Système de mesure de débit magnéto-inductif selon l'une des revendications 1 à 7, **caractérisé en ce qu'**un étalonnage général en usine de la deuxième unité fonctionnelle est suffisant, c'est-à-dire qu'un étalonnage spécifique à l'application n'est pas nécessaire lors de l'utilisation de tubes de mesure (1) présentant différentes sections transversales d'écoulement, c'est-à-dire différents diamètres internes, en raison du fait que seuls des tubes de mesure (1) dont la tolérance de diamètre en pourcentage est inférieure à la moitié de la précision en pourcentage souhaitée sont utilisables ou sont utilisés, et en raison du fait que les tubes de mesure (1) peuvent être fixés ou sont fixés dans le boîtier de système de mesure avec une tolérance de position en pourcentage qui correspond à un quart de la précision en pourcentage souhaitée.

9. Système de mesure de débit magnéto-inductif selon la revendication 8, dans lequel au moins une bobine de champ magnétique (9) comportant un noyau de bobine et deux pièces polaires (10, 11) se raccordant des deux côtés au noyau de bobine appartiennent au système générateur de champ magnétique (2), **caractérisé en ce que** le système générateur de champ magnétique (2) génère un champ magnétique suffisamment homogène pour tous les tubes de mesure (1) utilisables, en raison du fait que les pièces polaires (10, 11) s'étendent des deux côtés au-dessus du tube de mesure (1) utilisé.

10. Système de mesure de débit magnéto-inductif selon la revendication 9, **caractérisé en ce que** les pièces polaires (10, 11) s'étendent des deux côtés sur le tube de mesure (1) utilisé sur une distance qui correspond au diamètre extérieur du tube de mesure (1) ayant le plus grand diamètre extérieur dans la zone des pièces polaires (10, 11).

11. Système de mesure de débit magnéto-inductif selon la revendication 8, **caractérisé en ce que** les tubes de mesure (1), d'une part, et le boîtier de système de mesure, d'autre part, présentent des éléments de fixation horizontaux et/ou verticaux correspondant les uns aux autres et assurant la tolérance de position souhaitée.
